# EUROPEAN PATENT SPECIFICATION

(11) **EP 3 954 109 B1**
(45) Date of publication and mention of the grant of the patent: **24.01.2024**
(21) Application number: 20716551.5
(22) Date of filing: 26.03.2020
(51) Int. Cl.: H04M 11/04, G08B 25/08, G08B 25/14, G08B 21/04

(54) **APPARATUS AND METHOD FOR COMMUNICATION BETWEEN DEVICES IN A SOCIAL CARE ALARM SYSTEM**
VORRICHTUNG UND VERFAHREN ZUR KOMMUNIKATION ZWISCHEN GERÄTEN IN EINEM SOZIALPFLEGEALARMSYSTEM
APPAREIL ET PROCÉDÉ DE COMMUNICATION ENTRE DES DISPOSITIFS DANS UN SYSTÈME D'ALARME DE PROTECTION SOCIALE

(30) Priority: 08.04.2019 GB 201904973
(43) Date of publication of application: 16.02.2022
(73) Proprietor: Tunstall Integrated Health & Care Limited, Yorkshire DN14 0HR (GB)
(72) Inventor: ERLANDSSON, Bengt, Yorkshire DN14 0HR (GB); WEINER, Magnus, Yorkshire DN14 0HR (GB)
(74) Representative: Appleyard Lees IP LLP
(86) International application number: PCT/GB2020/050810
(87) International publication number: WO 2020/208338

(56) References cited:
- GB-A- 2 443 274
- US-A1- 2004 249 250
- US-B1- 6 618 394

## Description

The present disclosure relates in general to the field of social care alarm systems, and more particularly to methods and apparatus for establishing safe and reliable communications between devices in a social care alarm system.

### BACKGROUND

A social care alarm system monitors the safety and wellbeing of a person in their dwelling, such as in their own home or in a sheltered housing scheme. Typically, a client terminal unit is installed in the dwelling and is arranged to initiate an alarm call to a remote monitoring center when an alarm event is detected. As particular examples, the alarm may be triggered by the client pressing an alarm button on the client terminal unit itself or a button on a personal radio trigger unit (e.g. a pendant).

Some of these alarm events can have serious consequences. For example, the person may suffer a fall, leading to an automatically initiated alarm call to the control center. The client terminal may use data signalling to inform server apparatus at the control center of the alarm event. The control center apparatus may allow an operator terminal to open a voice communication path and talk with the person via the client terminal. The voice communication path is helpful in order to immediately reassure the person and asses their need for further care. If appropriate, a carer or medic can be dispatched to the dwelling. Therefore, it is important that the system should operate correctly and reliably at all times.

Traditionally, the client terminal and the control center would be connected over a public telephone network to carry voice calls and perform data signalling, such as by using in-band audible tones (e.g. DTMF tones). In some cases, the voice calls and data signalling can be carried over a cellular telephony network (e.g. 3G, 4G or 5G network), e.g. by incorporating a cellular transceiver into the client terminal unit. More recently, high-speed digital communications have been overlaid onto these traditional networks, leading to relatively widespread adoption of broadband Internet services in various forms. However, this expansion of connectivity brings multiple challenges for social care alarm systems. In particular, these modern digital communication paths can suffer from poor reliability, or can require highly skilled maintenance to remain effective. Consequently, there is a difficulty in providing communications between the client terminal units and the control center. Social care alarm systems will in practice encounter a diversity of communication paths and technologies which may, or may not, be available at each particular dwelling and which, or may not, be functional at any particular point in time.

Generally, it is desired to address one or more of the disadvantages associated with the related art, whether those disadvantages are specifically discussed herein or will be otherwise appreciated by the skilled person from reading the following description.

In the related art, US 2004/0249250A relates to a system and apparatus for monitoring and prompting medical self-care events and communicating medial self-care status, GB2443274A relates to a social alarm system and method of communication, and US6,618,394B1 relates to methods and apparatus for economical utilization of communication networks.

### SUMMARY

According to the present invention there is provided a social care alarm system and method as set forth in the appended claims. Other features of the invention will be apparent from the dependent claims, and the description which follows.

By way of introduction, in one example there is described a social care alarm system with a client terminal unit configured to be installed in a dwelling of a client, and a remote monitoring center coupled by a set of data carriers over one or more communications networks. The client terminal unit communicates with the monitoring center in a master-slave communication session , including a connection phase and disconnection phase, using a selected data carrier, which includes raising an alarm event and supporting a voice call. The client terminal unit is also able to send sessionless short status messages at predetermined intervals to the monitoring center using the selected data carrier without forming the master-slave communication session to monitor viability of the selected data carrier with reduced bandwidth consumption.

In one example there is described a method of communicating between at least one client terminal and a monitoring centre in a social care alarm system which includes forming a master-slave communication session between the monitoring center and the client terminal unit using a selected data carrier over a selected communication network, sending one or more request messages between the monitoring center and the client terminal unit during the master-slave communication session, raising an alarm event according to a response message between the monitoring center and the client terminal unit during the master-slave communication session, and supporting a voice call between the client terminal unit and the monitoring center in response to the alarm event; and transmitting sessionless status messages at predetermined intervals from the client terminal unit to the monitoring center using the selected data carrier over the selected communications network, wherein the sessionless status messages are sent by the client terminal unit without forming the master-slave communication session with the monitoring center.

As will be discussed in more detail below, the example embodiments address many of the difficulties of the related art. These and other features and advantages will be appreciated further from the following example embodiments.

### BRIEF DESCRIPTION OF THE DRAWINGS

For a better understanding of the invention, and to show how example embodiments may be carried into effect, reference will now be made to the accompanying drawings in which:
Figure 1 is a schematic view of an example social care alarm system;
Figure 2 is a schematic view of communications between devices in the social care alarm system;
Figure 3 is a schematic view of packets used during communications between devices in the social care alarm system;
Figure 4 is a more detailed schematic view of packets used during communications between devices in the social care alarm system;
Figure 5 is a schematic view of communications between devices in the social care alarm system illustrating phases during a session;
Figure 6 is a schematic view of communications between devices in the social care alarm system illustrating message sequencing;
Figure 7 is a schematic view of communications between devices in the social care alarm system illustrating sessionless short messages;
Figure 8 is a flowchart of an example method of communicating between devices in the social care alarm system; and
Figure 9 is a flowchart of another example method of communicating between devices as performed in the social care alarm system.

### DETAILED DESCRIPTION

The example embodiments will be described particularly with reference to a social care alarm system as shown in the drawings. However, it will be appreciated that the described apparatus and method could also be applied in many other specific implementations, as will be apparent to persons skilled in the art from the teachings herein.

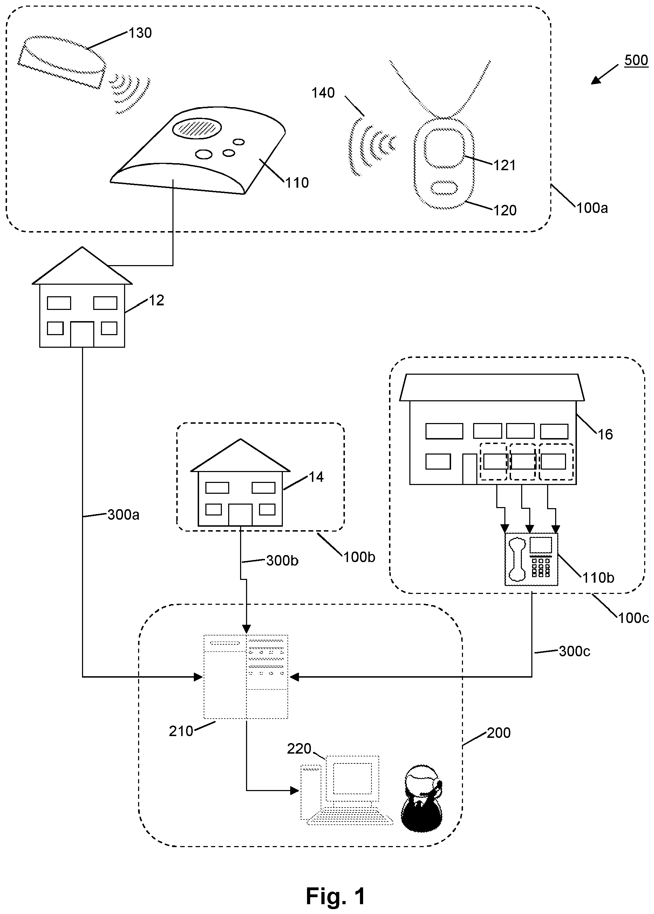

Figure 1 is a schematic diagram showing an illustrative social care alarm system 500. In this example, a large number of client terminal installations 100 are coupled to a central monitoring center 200 through one or more communications networks 300. The communications networks 300 are suitably capable of providing communications over a wide area, such as over a distance of tens orhundreds of kilometres. Typically, the monitoring center 200 would cover a number of towns or cities spread out geographically in a particular country or region.

The client terminal installations 100 are installed in respective client dwellings 12, 14, 16. Typically, the clients are elderly or infirm persons who have various health or mobility difficulties. Often, each client terminal installation 100 is retro-fitted in to the client's own house, and the installed equipment is adapted or augmented as the needs of that client are assessed and change over time.

Suitably, each installation 100 includes a client terminal unit 110. In this example, the client terminal unit 110 has a simple and straightforward user interface which is suitable for use by a wide range of people each with differing abilities. Typically the client terminal unit 110 presents a readily identified "alarm" button, so that the client may manually trigger an alarm event. The client terminal 110 may also include a "cancel" button, e.g. to cancel an unintentional alarm event, control the various functions of the client terminal, or respond to verbal instructions provided by the care operator in a voice call.

As shown by example installation 100a, the client terminal unit 110 may be coupled locally to one or more peripherals 120, 130, here illustrated by personal alarm trigger unit 120 and a set of sensors 130. In one example, local communications with the client terminal 110 are carried over a short range wireless radio transmission, e.g. using an ETSI EN300 220-2 (2000) Category 1 transceiver.

The personal trigger unit 120 may be carried or worn by the client, and may be provided in various configurations, such as a belt, a wrist strap, or a pendant, among others. The trigger unit 120 may include an alarm button 121 which allows the client to manually initiate an alarm event via the client terminal 110. In some examples, the trigger unit 120 may include a microphone and speaker to carry a voice audio channel to the client. In some examples, the personal trigger unit 120 may include a fall detector unit (e.g. using an accelerometer and/or a barometer) which is arranged to detect that the client has fallen and automatically initiate a corresponding fall alarm event via the client terminal 110.

Suitably, the sensors 130 may be wired to the client terminal 110, or may communicate over short range wireless radio transmissions. Physical wiring has the advantage of increased durability and reliability, but installation then is more costly and intrusive and the system is less flexible in the long term. A wireless connection is often preferred, but may introduce local connectivity issues. The sensors 130 may include any suitable telecare sensors. For example, the sensors 130 may be provided at suitable locations around the dwelling of the client in order to monitor their daily activities. The sensors 130 may include bed or chair occupancy sensors, pressure mats, passive infra-red movement detectors, door usage sensors, and so on. The sensors 130 may include environmental sensors (e.g. carbon monoxide, natural gas), amongst others. In particular, the sensors 130 may raise alerts or alarm events if certain conditions are detected - e.g. when a gas sensor detects an excess concentration of natural gas, implying that a gas cooker has been left on by the client.

The client terminal 110 may thus raise various types of alarm events and signal these alarm events to the monitoring center 200, based on the activity of the client as monitored by the client terminal unit 110 and/or the remote peripherals 120, 130. Typically, the client terminal 110 is configured to participate in a communication session with the remote monitoring center 200. The monitoring center 200 performs data signalling which allows the client terminal 110 to exchange data messages with a monitoring server 210. These sessions may be used for regular data exchanges, e.g. to perform maintenance or retrieve data from the sensors 130, or may be triggered by an alarm event. These data messages may include a serial number or identity of the client terminal unit 110, a coded indication of the nature of the triggering event, and so forth. In response, the server 210 may log the call and transfer control to an operator terminal 220, and the operator may then study data from the data messages and/or speak to the client via the client terminal 110 over a voice channel. There are times when it is vital to attend the client in person to give an urgent response. The operator may, for example, summon emergency medical services to attend the client's dwelling.

As illustrated by installation 100c, in some cases a plurality of the client terminal units 110 are coupled to a local warden station 110b such as in a sheltered housing scheme having multiple apartments with an on-site warden. The warden station 110b then communicates with the central monitoring center 200 as needed, such as when providing night-time cover, with these communications being performed suitably in the manner as discussed herein. As will be appreciated, many other specific installations are also possible beyond those illustrated.

### Communication Protocol

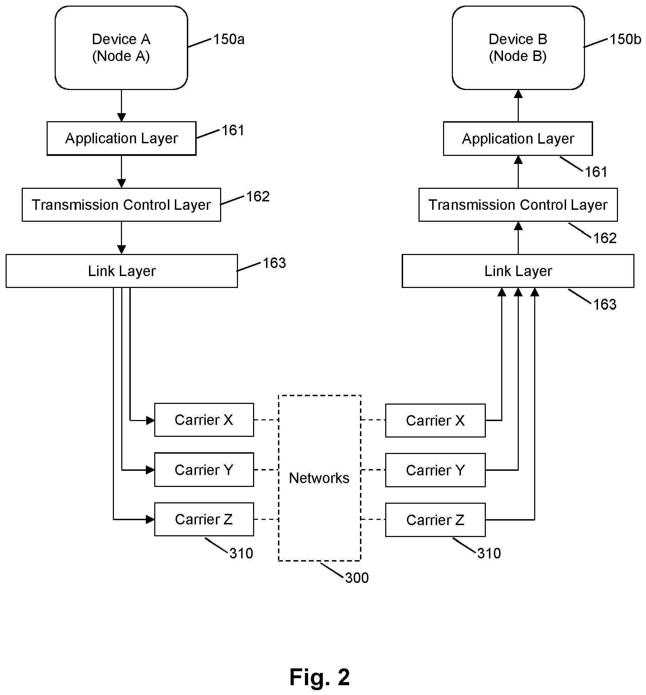

Figure 2 illustrates a communication protocol as adopted in the social care alarm system 500. This communication protocol is intended to allow connectivity between nodes, i.e. between one device and another in the social care alarm system. Notably, the communication protocol is configured to be independent of an underlying data carrier. That is, this social care communication protocol is used by devices in the social care alarm system 500, such as the client terminal units 110 and the central monitoring center 200 using any available data carrier that is able to transport data back and forth between those two communication nodes. Notably, the illustrated protocol allows the same basic communication structure regardless of the actual data carrier, giving a high degree of flexibility. The protocol allows those data carriers to evolve as appropriate without affecting the social alarm communication protocol. Also, new communication technologies can be readily adopted by the protocol as they become available.

Figure 2 illustrates two devices 150a & 150b within the social care alarm system 500. In this example, these two nodes communicate using a social care alarm communication protocol 160 which generates a payload ready to be carried by an appropriate data carrier 310 over one or more supporting networks 300. That is, the nodes 150 are each configured to transmit and receive the payload which is transported by an appropriate data carrier 310.

The illustrated communication protocol 160 uses three logical layers. Firstly, an application data packet 161 is created by an application layer. A transmission control layer packet 162, which includes the application data packet 161, is then formed in a transmission control layer. A link layer packet 163 is then formed from the transmission control layer packet 162. The link layer packet 163 is then provided as a payload to the appropriate data carrier 310 to be carried over a supporting network 300. This process is reversed at the receiving device 150b to extract the link layer packet 163 from the data carrier 310, then the transmission control layer packet 162, and ultimately the application layer packet 161 ready for processing within the receiving device 150b.

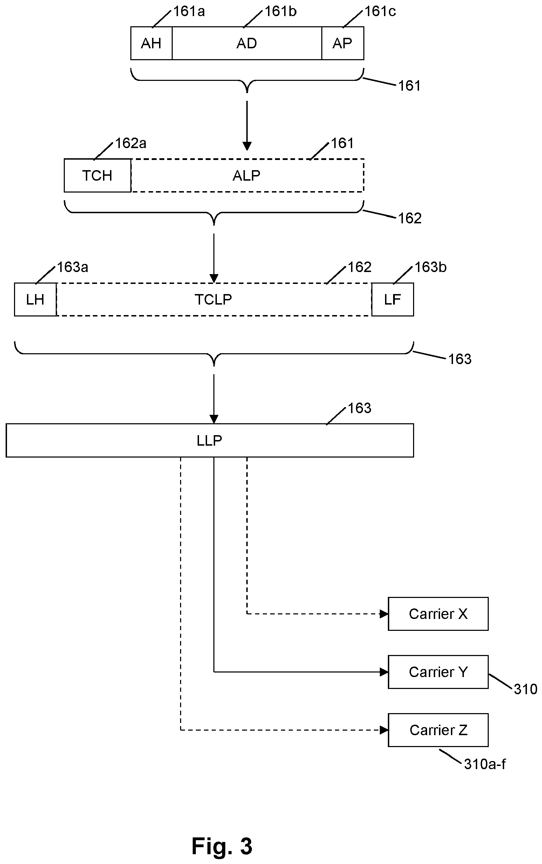

Figure 3 shows the protocol 160 in more detail. In this example, the application data packet ALP 161 comprises an application header AH 161a, an optional data field AD 161b, and an optional padding field AP 161c. In this example the application header 161a is fixed length and suitably comprises one byte. In this example, the data field 161b is variable in length. Suitably, the data field is defined as N bytes where N is a positive integer. Also, the padding field 161c, when present, comprises M bytes so that the number of bytes to be encrypted in this packet will meet the needs of an appropriate encryption algorithm. Thus, each application layer packet 161 comprises 1+N+M bytes.

In this example, the transmission control layer packet TCLP 162 is formed by adding a transmission control header TCH 162a to the application layer packet 161. The transmission control header 162a is suitably a consistent defined size, such as twelve bytes, and contains one or more fields including, in this example, any one or more of: a current protocol version number, encryption flags which identify the fields that have been encrypted and the encryption method used, control flags identifying the message as a request or a response, transport flags, a data channel identifier, a session identifier, a sequence number, and a padding length indicator indicating a length of the M bytes of padding in the application layer packet 161.

The link layer packet LLP 163 is likewise formed from the transmission control layer packet 162. The link layer packet 163 suitably encapsulates the transmission control layer packet 162, such as by adding a link layer header LH 163a and/or a link layer footer LF 163b. In this example, the link layer packet 163 is dependent on the type of carrier 310. Thus, the application packet 161 and the transmission control packet 162 are both independent of the data carrier 310, while the link layer packet 163 is adapted to the specific data carrier 310 of interest.

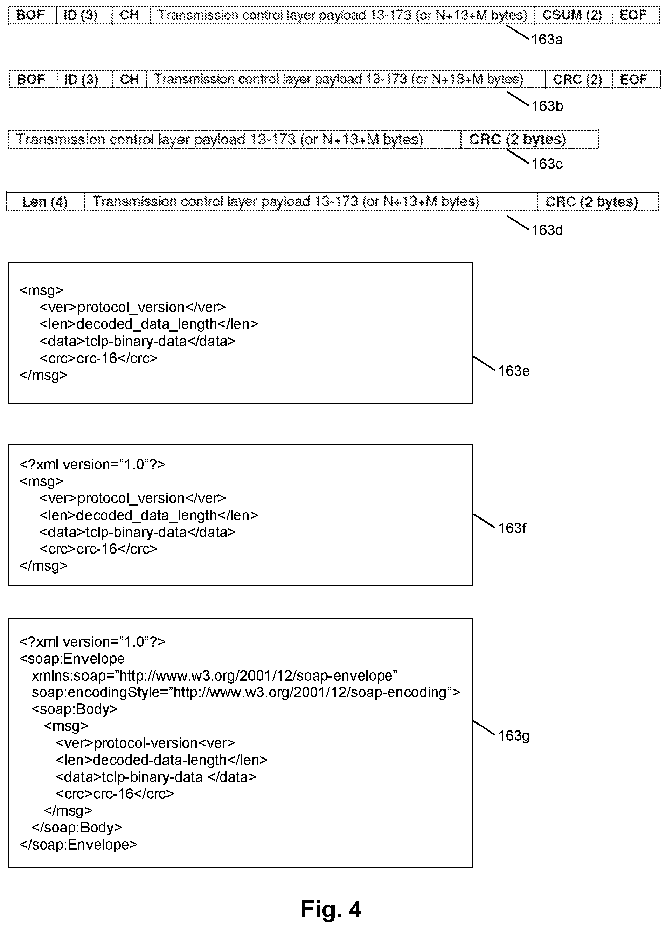

Figure 4 illustrates various forms of the link layer packet 163 for specific example data carriers 310. Suitably, the nodes 150 of the social care alarm system 500 are capable of communicating the link layer packets 163 over any one or more of a plurality of configured data carriers 310a-310g. Suitably, the nodes 150 are configured to communicate the link layer packets 163 by at least two, or more, configured data carriers 310. Each node 150 may then select a particular data carrier 310 to be used for a next data transmission amongst that configured set of data carriers 310. In the present system the available set of configurable data carriers include serial links, modem links, UDP over IP, TCP over IP, SIP instant messaging, XML, or XML over SOAP.

In one example, link layer packet 163a is adapted for traditional serial links such as RS232, RS485 or similar serial links. The link layer packet 163a includes a beginning of frame identifier BOF which is used on the receiver side to trigger a frame reception process. An identifier field ID determines the payload embedded in this link layer packet, i.e. identifying the link layer packet as being formed according to this social care alarm protocol 160. A channel indicator CH may be provided indicating a channel consistent with the transmission control layer header. A check sum CSUM may be provided as a check sum of all data in the transmission control layer payload 162. Suitably, an end of frame marker EOF is also provided.

In the next example, link layer packet 163b is formulated for phase shift keying (FSK) modem links such as V21, V23, bell 102, bell 202 or similar modem links. In this example the link layer packet 163b includes a beginning of frame identifier BOF which is used on the receiver side to trigger a frame reception process. An identifier field ID determines the payload embedded in this link layer packet, i.e. identifying the link layer packet as being formed according to this social care alarm protocol 160. A channel indicator CH may be provided indicating a channel consistent with the transmission control layer header. A cyclic redundancy check CRC may be provided as a validation of all data in the transmission control layer payload 162. Suitably, an end of frame marker EOF is also provided.

Link layer packet 163c has been formulated for transportation by UDP over IP. In this case, the transmission control layer payload 162 is encapsulated with a cyclic redundancy check CRC field calculated on contents of the transmission control layer packet 162, allowing the transmission control layer to verify that the transported data is intact. Notably, the CRC is calculated on unencrypted content, i.e. before any encryption process has been carried out for outgoing frames and after decryption process has been carried out for incoming frames. Thus, the transmission control layer is able to report to the application layer that the data is still intact after encryption/decryption. Incorrect decryption parameters might have been used, in which case the decrypted message is invalid and should be discarded.

In this example, the link layer packet 163c is then handed over to the data carrier for further processing. UDP adds the normal eight byte UDP header to this payload and hands it overto IP protocol which in turn adds a twenty-byte IP header, and the resulting IP datagram is then handed over to the next Layer 2 protocol such as Ethernet.

Link layer packet 163d has been formulated for transportation by TCP over IP by adding a length field LEN and a CRC field. Again this payload is then provided to TCP to add a twenty byte TCP header followed by a twenty byte IP header and handed over to the relevant Layer 2 protocol such as Ethernet.

Link layer packet 163e has been formulated for transport over SIP instant messaging. In this case the link layer may transfer the payload using a message method as defined in RFC 3428. The message body is based on XML and includes a protocol identifier, a protocol version field, a data link indicator, CRC, and the transmission control layer payload 162 here in MIME base 64 format. In this case the link layer payload 163e is restricted to 1300 bytes as defined in RFC 3428.

Link layer packet 163f has been formatted for transport as XML, and packet 163g as XML over SOAP. When transported as XML (eXtensible Markup Language), the message body is used similar to packet 163e. Likewise, when transported by SOAP, the same message body is included.

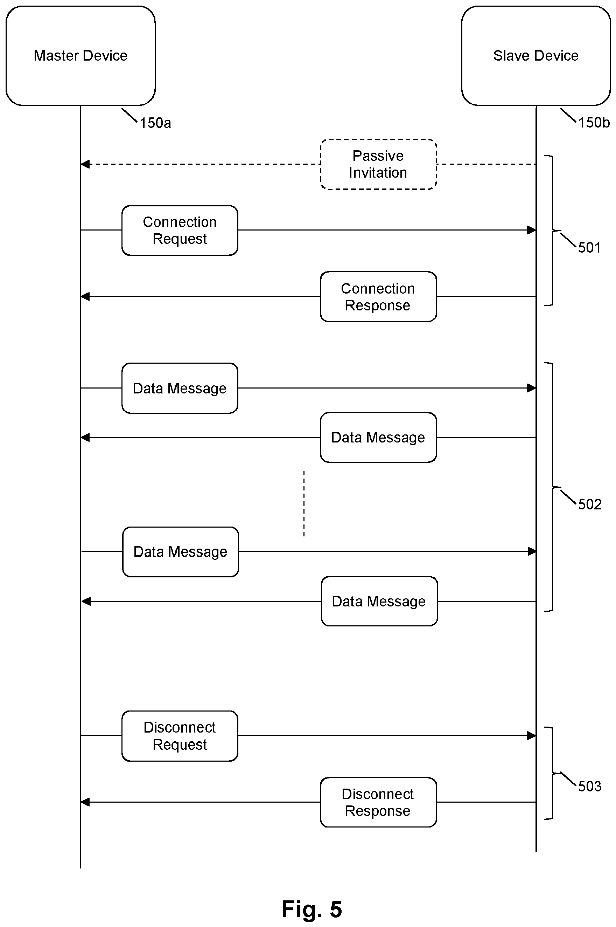

Figure 5 illustrates a communication session between the two nodes 150a, 150b. The communication session can be initiated from either node. The communication session generally provides a master-slave operation. As described below, the communication protocol allows the initiating node to operate either as the master 150a or as the slave 150b.

In the connection phase 501, the master node 150a issues a connection request message to the slave node 150b. The slave node 150b answers with a connection response message. The connection is completed and the two nodes now move on to a data communication phase 502.

The connection phase 501 suitably allows parameters for the session to be negotiated between the two nodes 150a, 150b. These parameters include a protocol version, a master-slave mode, a poll timer, a data channel, a session identity, a security profile, and a resource profile. Also, sequence numbers for both modes are synchronised during this connection phase.

Figure 5 also illustrates a further optional initiation procedure wherein the slave 150b takes a connection initiative and urges the master 150a to set up the communication session. In this case the slave node 150b sends a passive invite message. The master node 150a which receives the passive invite message then sets up the session by issuing a connection request to the slave 150b, and subsequently controls the communication session. This passive invite greatly simplifies protocol implementation in nodes which operate only as slaves since no master functionality is needed in that node.

Suitably, the connection phase 501 includes a protocol version negotiation. The master 150a is responsible for negotiating the protocol version to use during the communication session. That is, the master 150a might opt for switching to a lower protocol version in order to be compatible with an older slave device 150b. As noted above, the protocol version indicator is included in each frame. Thus, the master 150a can readily establish the protocol version appropriate to the slave 150b from the connection response message, or likewise from the passive invite.

Suitably, the connection phase 501 also includes negotiation of sequence numbers which are synchronised between the master 150a and the slave 150b.

Conveniently, the session uses a data channel as defined by the node which takes the connection initiative. Typically, when the connection initiative comes from the master 150a, the master 150a defines the data channel to use in the connection request message. The slave 150b then uses the data channel as specified in the connection request. Conversely, if the connection initiative is from the slave 150b by way of a passive invite, the slave 150b defines the data channel to use in the passive invite message. The master 150a then uses the supplied data channel information for the connection request issued to the slave 150b.

Suitably, the connection phase 501 includes a session identity which is generated by the master 150a and used thereafter by the master 150a to easily distinguish between different connected slaves. This session identity remains constant throughout a particular session.

Suitably, the connection phase 501 further includes a security set up and a resource profile set up. That is, the communication session defines a security profile and a resource profile. Thereafter, data messages are generated according to the established profiles. The security profile determines, for example, whether encryption is used, which parts of the message are encrypted, and the encryption method, such as DES or AES.

The data communication phase 502 allows for data to be communicated between the devices in a series of data messages each being a request from the master and a response from the slave. The nature of the request is specified in the data field 161b and likewise the response provided in the data field 161b of the response message. Typically this phase involves the monitoring center 200, acting as a master device 150a, obtaining information from the client terminal unit 110 acting as a slave 150b.

A disconnection phase 503 allows the communication session to be completed in an orderly manner. The master 150a suitable sends a disconnection request message. The slave 150b responds with a disconnection response message, whereupon the session ends. Both nodes 150a, 150b may now switch to an idle mode. Also, a time-out can also be applied by either node, typically sixty seconds but variable as one of the configurable parameters in the communication session. In this example, the session is terminated by the master 150a and by the slave 150b independently upon reaching the time out with no further communication in that session.

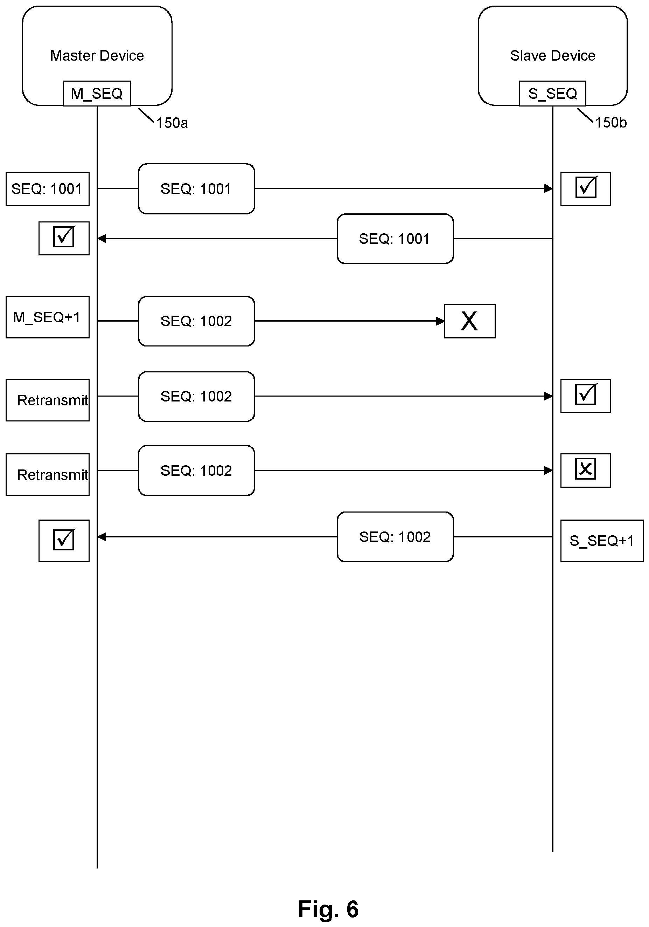

Figure 6 illustrates message sequencing between two devices here acting as the master node 150a and the slave node 150b. Message sequencing allows a determination that a message from the master 150a is lost, ensures that messages are not repeated inadvertently if the corresponding response message from a slave 150b gets lost in transmission, discards obsolete late arriving messages that have since been superseded, and rules out replay attacks.

The master 150a tags every outgoing message with a sequence number SEQ, and then expects the corresponding reply from the slave 150b to carry that same sequence number. If not, the master 150a determines that the received message is invalid and should be discarded. The slave 150b also uses the sequencing to determine whether an incoming message from the master 150a is a new message or is a retransmission.

The master 150a holds a master sequence number M_SEQ. This master sequence number is included in every outgoing new data transmission and is increased by one after each transmission. However, retransmissions of the same message maintain the same sequence number. For incoming response messages from the slave 150b, the master 150a will disregard any response messages that do not match the current sequence number held by the master 150a. Hence, late incoming messages are readily disregarded.

The slave 150b compares the sequence number of each incoming message with its own current sequence number. The slave 150b will accept messages having a higher sequence number than its currently held sequence number. When a new message is accepted, the slave 150b saves the incoming sequence number as its new slave 150b sequence number. The slave 150b processes the incoming message and sends a response message containing the updated slave sequence number.

If the message sequencing fails then the master 150a can consider the connection to be broken and disconnect the session as in phase 503 above.

The master 150a may attempt to retransmit a message for which no response is received. However, it is possible that the slave 150b received the original transmission and now also receives the retransmission. If so, the slave 150b will have updated the slave sequence number following processing of the original message. Now, upon receiving the retransmission with the same sequence number, the slave 150b can readily establish that this is a retransmission of a message which has already been received and processed. As a result the slave 150b will resend the last transmitted message to the master 150a and does not process the retransmission. This ensures that unwanted operations at the slave 150b are avoided. For example, a command such as *"increase audio level by one"* should be performed only once and should not be repeated by the slave 150b after processing both the original request message and the retransmission of that request message.

Where the slave 150b receives a request message having a current sequence number as that held by the slave 150b but the message type is not the same as the previously received message then the received message is determined to be an error, i.e. a late arriving message out of sequence, and should be discarded.

In one example the sequence numbers are fifteen bit numbers. The initial sequence number can be randomised during the connection phase and then updated incrementally during the session. Suitably, in the connection phase, the master 150a generates a random 15 bit number as the master frame sequence number which is included in the connection request message. That sequence number is then stored by the slave 150b and used subsequently as described above.

### Sessionless Short Messages

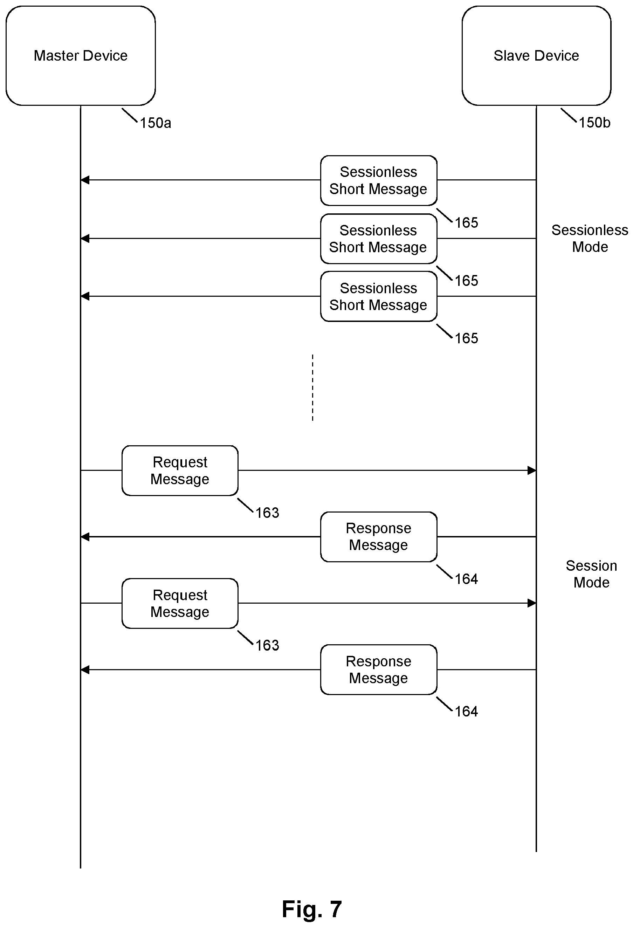

Figure 7 illustrates unsolicited sessionless short messages 165 which are sent by a slave 150b to encourage a master 150a to take a specific action. Suitably, these sessionless short messages 165 follow the same communication protocol as already described for the messages 163 & 164 used in a connection session. In particular, the application layer, transport layer and link layer of these unsolicited short messages follow the same format as already described. In the application layer, the application header AH 161a, which is suitably only 1 byte in length, identifies this message as being a sessionless short message. Conveniently, the sequence number is set to a reserved fixed value, such as 0 (0x0000) or 65535 (0xFFFF), which is readily recognisable by both nodes. Notably, these unsolicited messages do not require any specific response message from the master 150a. Thus, the unsolicited messages 165 are sessionless and are performed without creating a session between the master 150a and the slave 150b. This ability to operate selectively in both a connected session mode exchanging request and response messages 163, 164, and in a sessionless mode with the sessionless short messages 165, provides remarkable advantages for the social care alarm system.

As a practical matter, the social care alarm system 500 must be reliable and operate when needed in an alarm event, such as a fall by the person being monitored. However, the data carriers 310 and networks 300 can be unreliable, e.g. because a router in the dwelling needs rebooting, or suffer transient dropouts. Hence, the social care alarm system 500 is configured to repeatedly test the communication channels between the various nodes and particularly between the client terminal units 110 and the monitoring centers 200.

Suitably, the client terminal unit 110 is configured to send short unsolicited status messages, i.e. a ping message, to the monitoring center 200 at predetermined regular intervals, such as every five minutes. Thus, the client terminal unit 110 sends the short unsolicited status message to the monitoring server 200 at the end of each interval. This ongoing heartbeat procedure allows the monitoring center 200 to maintain a log of communications with each client terminal 110, thereby reliably testing the relevant data carrier 310 and any other intermediate parts of the system, i.e. confirming communication between these nodes and/or between any intermediary components over the relevant data carrier and network.

If the heartbeat is not received then the monitoring center 200 can take an appropriate escalation action. For example, the monitoring center can raise an alert on an operator terminal 220, initiate a master-slave connection session over a secondary data carrier 310, and so on. If that alternate path is successful then the monitoring center 200 can instruct client terminal unit 110 to use that secondary data path in future. Thus, the monitoring center 200 establishes a loss of communication with a particular client terminal 110 and can take appropriate action to remedy that situation. However, it will be appreciated that these frequent heartbeat messages consume significant bandwidth and can cause significant costs, especially where the data carrier charges for data volume carried. Thus, this ability for the social care alarm system 500 to switch between short unsolicited sessionless messages 165 and larger connected session messages 163, 164 for data transfer minimises the overall overhead and costs whilst preserving communication reliability.

Optionally, the frequent monitoring status message 165 can have a plurality of types. A first type minimises data content and reports basic information such as a serial number or other unique identity of the node in question. Suitably, other brief information is provided such as the currently set ping interval, and basic status information such as a power mode as a flag between AC mains power or battery back up, battery level, battery low level indicator, charging time, and an error status such as a low battery, a test failure to a peripheral link, the use of a redundant alarm path following failure of a primary alarm path, and so on. A more detailed message may also include periodic link test status for each of the connected peripherals 120, 130.

In one example the receiving node (i.e. the monitoring center 200) can if desired issue a passive pong message as a reply to an unsolicited passive ping message. The pong message can be a simple acknowledgement without data (i.e. using only the header information described above). Alternatively, data can be carried such as setting a new ping interval or instructing the other node (client terminal unit 110) to adopt an alternative ping interval such as when operating on battery power.

As noted above, another use for these unsolicited messages 165 is a passive invite indicating that the master should connect and start a session. This option would be appropriate for example following detection of an alarm event.

A further use of the unsolicited messages is as a passive poll. In certain network environments it can be difficult for a master 150a to initiate and send data traffic to a slave 150b. For example, the slave 150b might reside behind a firewall that prohibits unexpected incoming traffic. The passive poll functionality allows the slave 150b to issue a passive poll message suitably on a regular basis. Typically, a restricting firewall will then allow a reply message to be sent back to the slave 150b, normally within some kind of limited time window. After receiving the passive poll message the master 150a can now reach the slave 150b with a connection request message, since the firewall determines that the incoming request message is a reply to a recent outgoing message (namely the outgoing passive poll message).

### Opportunistic Maintenance

A further issue arises in that the client terminal units 110 require maintenance and updates from time to time. Typically, a maintenance call would be initiated by the monitoring center 200. However, as noted above, it can be difficult to reach some of the client terminal units 110. Therefore, the social care alarm system 500 in this example is configured to perform maintenance opportunistically upon forming a connection session with the client terminal unit 110. That is, upon connecting in a session for other purposes, the monitoring center 200 determines that an update is required and, within the same session, performs the required maintenance functions. Suitably, the need for maintenance is identified based on a serial number or other unique identify of the client terminal unit 110 as provided in the response messages 164 formulated as set out above. Alternately, the need for maintenance can be determined based on parameters which are declared by the client terminal unit 110 in the response messages 164, such as a protocol version number, etc. Still further, the need for maintenance can be determined by making specific requests to the client terminal unit 110 in the data field of the request message 163 and receiving status information in return. The maintenance can then be performed by supplying appropriate updated configurations in the data field of a request message 163. Specific examples include changing serial channel speed, FSK modem parameters, GSM serial channel speed, and so on. Other examples include changing IP settings, or providing a firmware update.

### Voice Call Setup

As noted above, an important feature of the social care alarm system 500 is to provide a voice channel for audio communication between the monitoring center 200 and the client terminal unit 110. In this example, the monitoring center 200 suitably requests voice call capability information from the client terminal unit 110. That is, the monitoring center 200 during a current connected data session obtains information as to the current connection type and capabilities of the client terminal unit 110 for performing a voice call. The current connection information may include whether the current connection is by wired or wireless network, and whether a primary data carrier or a secondary data carrier is being used. The voice call capabilities indicate, for example, that a voice call is capable within the current session, by an embedded voice session over an analogue telephone line, by an embedded voice session over a wireless carrier (e.g. GSM or other cellular network), or an embedded voice session via SIP over IP. In another example, the voice call capabilities indicate that a call back to the client terminal unit 110 is possible via an analogue telephone line, via a wireless or cellular connection, or via SIP/IP. As another option, the voice call capabilities indicate that a dial out by the client terminal unit 110 is possible via an analogue telephone line, via a wireless or cellular connection, or via SIP/IP.

The monitoring center 200 suitably instructs the client terminal unit 110 to enter a voice call according to a voice call mode, which suitably is selected from amongst the indicated capabilities of that particular client terminal unit 110. Of course, there capabilities may change over time and hence it is important that the currently intended voice call is selected based on a viable capability. For example, the capability of an embedded voice call allows the monitoring center 200 to switch to the voice call mode in the current session. By contrast, the call back capability allows the monitoring center to call the client terminal unit 110 by the appropriate network, and configures the client terminal unit 110 ready to receive that incoming voice call. When in this mode, the client terminal unit 110 is instructed to autoanswer incoming calls for a specified time window. A progress report may be provided with status information when the voice call is terminated. Likewise, the dial out capability allows the monitoring center to instruct the client terminal unit 110 to make an outgoing call to the monitoring center over the appropriate data carrier and network and establish the voice communication. The capabilities suitably include parameters, such as muting a dial tone, enabling or disabling DTMF tones during the voice call, the telephone number for the dial out call, and so on. The data connection may remain active in parallel with the voice call and further request messages may be used to control the client terminal unit 110 from the monitoring center 200, such as adjusting a speaker level or microphone level, toggling between simples or duplex modes for greater clarity, switching audio between the personal radio trigger 120 and the client terminal unit 110, and so on. Notably, this flexibility allows the monitoring center 200 to obtain an operative voice call with the client terminal unit 110 by utilising any appropriate capability.

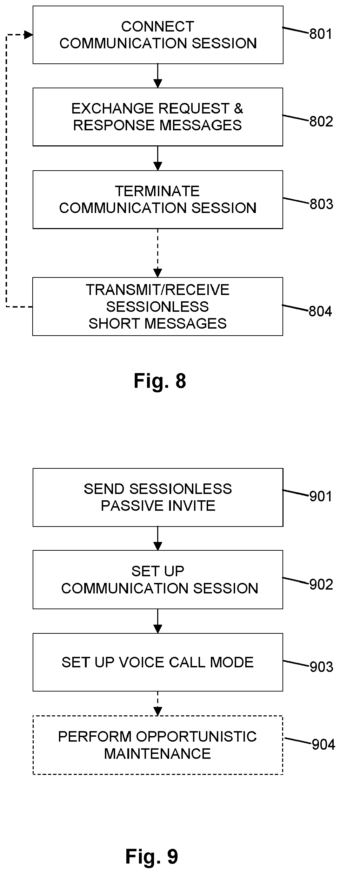

Figure 8 illustrates an example method for communicating between devices in a social care alarm system. Suitably, the system is as described above, including at least one client terminal unit 110 configured to be installed in a dwelling of a client and a monitoring center 200 remotely coupled to the client terminal unit 110 by a set of data carriers 310 over one or more communications networks 300.

Step 801 suitably includes forming a master-slave communication session between the monitoring center 200 and the client terminal unit 110 using a selected data carrier 310a in the set of data carriers 310a-g over a selected communication network of the one or more communications networks 300.

Step 802 suitably includes exchanging one or more request messages between the monitoring center 200 and the client terminal unit 110 during the master-slave communication session. These messages may include raising an alarm event with the monitoring center 200 during the master-slave communication session. The devices then have the ability to support a voice call between the client terminal unit 110 and the monitoring center 200, i.e. in response to the alarm event.

When master-slave communication session has terminated as at 803, the devices suitably settle back into an idle mode or quiescent mode. In this example, as at the step 804, the method suitably includes transmitting sessionless status messages at predetermined intervals from the client terminal unit 110 to the monitoring center 200 using the selected data carrier over the selected communications network, wherein the sessionless status messages are sent by the client terminal unit 110 without forming the master-slave communication session with the monitoring center 200.

Figure 9 illustrates further refinements of the example method. As at step 901, the method may include sending a sessionless short passive invite message from the client terminal unit to the monitoring center as an invitation for the monitoring center to initiate the master-slave communication session as at step 902. As at step 903, the method may further include configuring a voice call mode of the client terminal unit 110 during the master-slave communication session with the monitoring center 200. Also, as step 904, the method suitably includes performing opportunistic maintenance of the client terminal 110 during any convenient master-slave communication session with the monitoring center 200. The sessions between the client terminal unit 110 and the monitoring center 200 are useful for a wide variety of purposes such as to exchange regular data updates, in addition to performing alarm events. Suitably, this opportunistic maintenance is carried out during a low-priority session with the particular client terminal unit 110 of interest.

### Industrial Application

The industrial application of the present invention will be clear from the discussion above. Likewise, the many advantages of the invention will be apparent from these embodiments and/or from practicing the example embodiments of the invention.

Although a few preferred embodiments have been shown and described, it will be appreciated by those skilled in the art that various changes and modifications might be made without departing from the scope of the invention, as defined in the appended claims.

## Claims

1. A social care alarm system (500), comprising:
at least one client terminal unit (110) configured to be installed in a dwelling of a client; and
a monitoring centre (200) remotely coupled to the client terminal unit (110) by a set of data carriers (310) over one or more communications networks;
wherein the client terminal (110) is operable to communicate using a selected data carrier in the set of data carriers (310) over a selected communication network of the one or more communications networks, and configured to send status messages (165) at predetermined intervals to the monitoring centre (200) using the selected data carrier over the selected communications network;
**characterised in that:**
the client terminal unit (110) is operable to communicate with the monitoring centre (200) in a master-slave communication session including a connection phase (501) and disconnection phase (503),
the client terminal unit (110) is configured to receive request messages (163) from the monitoring centre (200) during the master-slave communication session, to raise an alarm event with the monitoring centre (200) by sending a response message (164) during the master-slave communication session, and to support a voice call between the client terminal unit (110) and the monitoring centre (200) in response to the alarm event; and
the status messages (165) are sessionless, being sent by the client terminal unit (110) without forming the master-slave communication session with the monitoring centre (200).

2. The social care alarm system (500) of claim 1, wherein the client terminal unit (110) and the monitoring centre (200) are both configured to operate a social care alarm communication protocol which is operable over each of the set of data carriers (310), and wherein the social care alarm communication protocol comprises a plurality of layers including an application layer (161) and a transmission control layer (162) which are fully independent of the set of data carriers (310) and a link layer (163) which adapts a payload from the transmission control layer (162) into a link layer (163) packet appropriate to the selected data carrier.

3. The social care alarm system (500) of claim 2, wherein the application layer (161) is configured to operate using an application layer (161) packet having a header field, an optional data field, and an optional padding field, wherein the transmission control layer (162) is configured to operate using a transmission control packet formed by adding a transmission control header to the application layer (161) packet, and wherein the link layer (163) is configured to operate by encapsulating the transmission control packet to form the link layer (163) packet.

4. The social care alarm system (500) of claim 3, wherein the sessionless status messages (165) and the master-slave communication session both use the same social care alarm communication protocol.

5. The social care alarm system (500) of claim 4, wherein the sessionless status messages (165) utilise the application layer (161) packet having solely the header field and at least some of the request and response messages (164) of the master-slave communication session utilise the application layer (161) packet including the header field and the data field.

6. The social care alarm system (500) of claim 1, wherein the sessionless status messages (165) do not require a response from the monitoring centre (200).

7. The social care alarm system (500) of claim 1, wherein the monitoring centre (200) is configured to initiate the master-slave communication session with the client terminal unit (110) over a secondary data carrier of the set of data carriers (310) after determining a loss of communication over a primary data carrier, and wherein the client terminal unit (110) is configurable by the monitoring centre (200) to use the secondary data carrier as the selected data carrier instead of the primary data carrier, or vice versa.

8. The social care alarm system (500) of claim 1, wherein the client terminal unit (110) is further configured to send a sessionless passive poll message to the monitoring centre (200) in response to which the monitoring centre (200) initiates the master-slave communication session with the client terminal unit (110) within a time window sufficient to pass through a firewall configured to protect the client terminal unit (110) from unexpected incoming traffic.

9. The social care alarm system (500) of claim 1, wherein the monitoring centre (200) is configured to opportunistically perform a maintenance action on the client terminal unit (110) during the master-slave communication session upon identifying a need for maintenance of that client terminal unit (110) during the master-slave communication session.

10. The social care alarm system (500) of claim 1, wherein the monitoring centre (200) is configured to request voice call capability information from the client terminal unit (110) which identifies one or more call modes available at that client terminal unit (110) to support a voice call.

11. The social care alarm system (500) of claim 10, wherein the client terminal unit (110) is configured to operate in a selected voice call mode as instructed by the monitoring centre (200) according to the voice call capability information from the client terminal unit (110).

12. The social care alarm system (500) of claim 11, wherein the voice call mode is selected from a group comprising at least: an embedded voice mode in which the client terminal unit (110) is configured to perform an embedded voice session within the current master-slave communication session, a call back mode in which the client terminal unit (110) is configured to receive a call back from the monitoring centre (200) over an identified data carrier, and a dial out mode in which the client terminal unit (110) is configured to call out to the monitoring centre (200) over an identified data carrier.

13. The social care alarm system (500) of claim 11, wherein configuring the client terminal unit (110) to operate in the voice call mode includes passing parameters of the selected voice call mode from the monitoring centre (200) to the client terminal unit (110).

14. The social care alarm system (500) of claim 1, wherein the client terminal unit (110) comprises an alarm button to manually trigger the alarm event and/or wherein the client terminal unit (110) is coupled by a local wireless link to a wearable personal alarm trigger unit having an alarm button to manually trigger the alarm event.

15. A method of communicating between at least one client terminal and a monitoring centre in a social care alarm system (500) which includes the at least one client terminal unit (110) configured to be installed in a dwelling of a client and the monitoring centre (200) remotely coupled to the client terminal unit (110) by a set of data carriers (310) over one or more communications networks, the method comprising:
forming a master-slave communication session, including a connection phase (501) and disconnection phase (503), between the monitoring centre (200) and the client terminal unit (110) using a selected data carrier in the set of data carriers (310) over a selected communication network of the one or more communications networks,
sending one or more request messages (163) between the monitoring centre (200) and the client terminal unit (110) during the master-slave communication session, raising an alarm event according to a response message (164) between the monitoring centre (200) and the client terminal unit (110) during the master-slave communication session, and supporting a voice call between the client terminal unit (110) and the monitoring centre (200) in response to the alarm event; and
transmitting sessionless status messages (165) at predetermined intervals from the client terminal unit (110) to the monitoring centre (200) using the selected data carrier over the selected communications network, wherein the sessionless status messages (165) are sent by the client terminal unit (110) without forming the master-slave communication session with the monitoring centre (200).

## Patentansprüche

1. Sozialpflege-Alarmsystem (500), umfassend:
mindestens eine Client-Terminaleinheit (110), die dazu konfiguriert ist, in einer Wohnung eines Kunden installiert zu werden; und
eine Überwachungszentrale (200), die über einen Satz von Datenträgern (310) über ein oder mehrere Kommunikationsnetze entfernt mit der Client-Terminaleinheit (110) verbunden ist;
wobei das Client-Terminal (110) so betrieben werden kann, dass es unter Verwendung eines ausgewählten Datenträgers im Satz von Datenträgern (310) über ein ausgewähltes Kommunikationsnetzwerk des einen oder der mehreren Kommunikationsnetzwerke kommuniziert, und konfiguriert ist, um Statusmeldungen (165) in vorbestimmten Intervallen unter Verwendung des ausgewählten Datenträgers über das ausgewählte Kommunikationsnetzwerk an die Überwachungszentrale (200) zu senden;
**dadurch gekennzeichnet, dass:**
die Client-Terminaleinheit (110) kann so betrieben werden, dass sie mit der Überwachungszentrale (200) in einer Master-Slave-Kommunikationssitzung kommuniziert,
die eine Verbindungsphase (501) und eine Trennungsphase (503) umfasst,
die Client-Terminaleinheit (110) konfiguriert ist, um während der Master-Slave-Kommunikationssitzung Anforderungsnachrichten (163) von der Überwachungszentrale (200) zu empfangen, um ein Alarmereignis bei der Überwachungszentrale (200) auszulösen, indem während der Master-Slave-Kommunikationssitzung eine Antwortnachricht (164) gesendet wird, und um einen Sprachanruf zwischen der Client-Terminaleinheit (110) und der Überwachungszentrale (200) als Reaktion auf das Alarmereignis zu unterstützen; und
die Statusmeldungen (165) sitzungslos sind und von der Client-Terminaleinheit (110) gesendet werden, ohne die Master-Slave-Kommunikationssitzung mit der Überwachungszentrale (200) zu bilden.

2. Sozialpflege-Alarmsystem (500) nach Anspruch 1, wobei sowohl die Client-Terminaleinheit (110) als auch die Überwachungszentrale (200) konfiguriert sind, um ein Kommunikationsprotokoll für Pflegealarme zu betreiben, das über jeden des Satzes von Datenträgern (310) betrieben werden kann, und wobei das Kommunikationsprotokoll für Pflegealarme mehrere Schichten umfasst, einschließlich einer Anwendungsschicht (161) und einer Übertragungssteuerungsschicht (162), die von der Menge der Datenträger (310) völlig unabhängig sind, und einer Verbindungsschicht (163), die eine Nutzlast von der Übertragungssteuerungsschicht (162) in ein Paket der Verbindungsschicht (163) umwandelt, das für den ausgewählten Datenträger geeignet ist.

3. Sozialpflege-Alarmsystem (500) nach Anspruch 2, wobei die Anwendungsschicht (161) für den Betrieb unter Verwendung eines Pakets der Anwendungsschicht (161) mit einem Header-Feld, einem optionalen Datenfeld und einem optionalen Füllfeld konfiguriert ist, wobei die Übertragungssteuerungsschicht (162) so konfiguriert ist, dass sie unter Verwendung eines Übertragungssteuerungspakets arbeitet, das durch Hinzufügen eines Übertragungssteuerungsheaders zum Paket der Anwendungsschicht (161) gebildet wird, und wobei die Verbindungsschicht (163) so konfiguriert ist, dass sie das Übertragungssteuerpaket kapselt, um das Paket der Verbindungsschicht (163) zu bilden.

4. Sozialpflege-Alarmsystem (500) nach Anspruch 3, wobei die sitzungslosen Statusmeldungen (165) und die Master-Slave-Kommunikationssitzung beide dasselbe Sozialpflege-Alarm-Kommunikationsprotokoll verwenden.

5. Sozialpflege-Alarmsystem (500) nach Anspruch 4, wobei die sitzungslosen Statusmeldungen (165) das Paket der Anwendungsschicht (161) verwenden, das ausschließlich das Header-Feld aufweist, und mindestens einige der Anforderungs- und Antwortnachrichten (164) der Master-Slave-Kommunikationssitzung das Paket der Anwendungsschicht (161) einschließlich des Header-Felds und des Datenfelds nutzen.

6. Sozialpflege-Alarmsystem (500) nach Anspruch 1, wobei die sitzungslosen Statusmeldungen (165) keine Antwort von der Überwachungszentrale (200) erfordern.

7. Sozialpflege-Alarmsystem (500) nach Anspruch 1, wobei die Überwachungszentrale (200) konfiguriert ist, um die Master-Slave-Kommunikationssitzung mit der Client-Terminaleinheit (110) über einen sekundären Datenträger des Satzes von Datenträgern (310) zu initiieren, nachdem ein Kommunikationsverlust über einen primären Datenträger festgestellt wurde, und wobei die Client-Terminaleinheit (110) durch die Überwachungszentrale (200) konfigurierbar ist, um den sekundären Datenträger anstelle des primären Datenträgers als ausgewählten Datenträger zu verwenden oder umgekehrt.

8. Sozialpflege-Alarmsystem (500) nach Anspruch 1, wobei die Client-Terminaleinheit (110) ferner konfiguriert ist, um eine sitzungslose passive Poll-Nachricht an die Überwachungszentrale (200) zu senden, woraufhin die Überwachungszentrale (200) die Master-Slave-Kommunikationssitzung mit der Client-Endgeräteinheit (110) innerhalb eines Zeitfensters initiiert, das ausreichend ist, um eine konfigurierte Firewall zu passieren, um die Client-Terminaleinheit (110) vor unerwartetem eingehendem Datenverkehr zu schützen.

9. Sozialpflege-Alarmsystem (500) nach Anspruch 1, wobei die Überwachungszentrale (200) konfiguriert ist, um während der Master-Slave-Kommunikationssitzung opportunistisch eine Wartungsaktion an der Client-Terminaleinheit (110) durchzuführen, wenn festgestellt wird, dass während der Master-Slave-Kommunikationssitzung eine Wartung dieser Client-Terminaleinheit (110) erforderlich ist.

10. Sozialpflege-Alarmsystem (500) nach Anspruch 1, wobei die Überwachungszentrale (200) konfiguriert ist, um von der Client-Terminaleinheit (110) Informationen zur Sprachanruffähigkeit anzufordern, die einen oder mehrere Anrufmodi identifizieren, die an dieser Client-Terminaleinheit (110) zur Unterstützung eines Sprachanrufs verfügbar sind.

11. Sozialpflege-Alarmsystem (500) nach Anspruch 10, wobei die Client-Terminaleinheit (110) konfiguriert ist, um in einem ausgewählten Sprachanrufmodus gemäß den Anweisungen der Überwachungszentrale (200) gemäß den Sprachanruffähigkeitsinformationen von der Client-Terminaleinheit (110) zu arbeiten.

12. Sozialpflege-Alarmsystem (500) nach Anspruch 11, wobei der Sprachrufmodus aus einer Gruppe ausgewählt wird, die mindestens Folgendes umfasst: einen eingebetteten Sprachmodus, in dem die Client-Terminaleinheit (110) so konfiguriert ist, dass sie eine eingebettete Sprachsitzung innerhalb der aktuellen Master-Slave-Kommunikationssitzung durchführt, einen Rückrufmodus, in dem die Client-Terminaleinheit (110) so konfiguriert ist, dass sie über einen identifizierten Datenträger einen Rückruf von der Überwachungszentrale (200) empfängt, und einen Wählmodus, in dem die Client-Terminaleinheit (110) so konfiguriert ist, dass sie über einen identifizierten Datenträger eine Verbindung zur Überwachungszentrale (200) herstellt.

13. Sozialpflege-Alarmsystem (500) nach Anspruch 11, wobei das Konfigurieren der Client-Terminaleinheit (110) für den Betrieb im Sprachanrufmodus das Übergeben von Parametern des ausgewählten Sprachanrufmodus von der Überwachungszentrale (200) an die Client-Terminaleinheit (110) umfasst.

14. Sozialpflege-Alarmsystem (500) nach Anspruch 1, wobei die Client-Terminaleinheit (110) eine Alarmtaste zum manuellen Auslösen des Alarmereignisses umfasst, und/oder wobei die Client-Terminaleinheit (110) über eine lokale drahtlose Verbindung mit einer tragbaren persönlichen Alarmauslöseeinheit gekoppelt ist, die über einen Alarmknopf zum manuellen Auslösen des Alarmereignisses verfügt.

15. Verfahren zur Kommunikation zwischen mindestens einem Client-Terminal und einer Überwachungszentrale in einem Alarmsystem für Sozialpflege (500), das die mindestens eine Client-Terminaleinheit (110), die für die Installation in einer Wohnung eines Kunden konfiguriert ist, und die Überwachungszentrale (200) umfasst, die durch einen Satz von Datenträgern (310) über ein oder mehrere Kommunikationsnetze entfernt mit der Client-Terminaleinheit (110) verbunden ist, wobei das Verfahren Folgendes umfasst:
Bilden einer Master-Slave-Kommunikationssitzung, einschließlich einer Verbindungsphase (501) und einer Trennungsphase (503) zwischen der Überwachungszentrale (200) und der Client-Terminaleinheit (110) unter Verwendung eines ausgewählten Datenträgers im Satz von Datenträgern (310) über ein ausgewähltes Kommunikationsnetzwerk des einen oder der mehreren Kommunikationsnetzwerke,
Senden einer oder mehrerer Anforderungsnachrichten (163) zwischen der Überwachungszentrale (200) und der Client-Terminaleinheit (110) während der Master-Slave-Kommunikationssitzung, was gemäß einer Antwortnachricht (164) zwischen der Überwachungszentrale (200) und der Client-Terminaleinheit (110) während der Master-Slave-Kommunikationssitzung ein Alarmereignis auslöst und einen Sprachanruf zwischen der Client-Terminaleinheit (110) und der Überwachungszentrale (200) als Reaktion auf das Alarmereignis unterstützt; und
Übertragen von sitzungslosen Statusmeldungen (165) in vorgegebenen Intervallen von der Client-Terminaleinheit (110) an die Überwachungszentrale (200) unter Verwendung des ausgewählten Datenträgers über das ausgewählte Kommunikationsnetzwerk, wobei die sitzungslosen Statusmeldungen (165) von der Client-Terminaleinheit (110) gesendet werden, ohne die Master-Slave-Kommunikationssitzung mit der Überwachungszentrale (200) zu bilden.

## Revendications

1. Système d'alarme de protection sociale (500) comprenant :
au moins une unité terminale client (110) configurée pour être installée dans le logement d'un client ; et
un centre de surveillance (200) couplé à distance à l'unité terminale client (110) par un ensemble de supports de données (310) sur un ou plusieurs réseaux de communication ;
dans lequel le terminal client (110) permet de communiquer à l'aide d'un support de données sélectionné dans l'ensemble de supports de données (310) sur un réseau de communication sélectionné parmi les un ou plusieurs réseaux de communication, et configuré pour envoyer des messages d'état (165) à des intervalles prédéterminés au centre de surveillance (200) en utilisant le support de données sélectionné sur le réseau de communication sélectionné ;
**caractérisé en ce que :**
l'unité terminale client (110) permet de communiquer avec le centre de surveillance (200) dans une session de communication maître-esclave comportant une phase de connexion (501) et une phase de déconnexion (503), l'unité terminale client (110) est configurée pour recevoir des messages de demande (163) du centre de surveillance (200) pendant la session de communication maître-esclave, pour déclencher un événement d'alarme avec le centre de surveillance (200) en envoyant un message de réponse (164) pendant la session de communication maître-esclave, et pour prendre en charge un appel vocal entre l'unité terminale client (110) et le centre de surveillance (200) en réponse à l'événement d'alarme ; et
les messages d'état (165) sont sans session, étant envoyés par l'unité terminale client (110) sans former la session de communication maître-esclave avec le centre de surveillance (200).

2. Système d'alarme de protection sociale (500) selon la revendication 1, dans lequel l'unité terminale client (110) et le centre de surveillance (200) sont tous deux configurés pour faire fonctionner un protocole de communication d'alarme de protection sociale qui est exploitable sur chacun de l'ensemble de supports de données (310), et dans lequel le protocole de communication d'alarme de protection sociale comprend une pluralité de couches comportant une couche d'application (161) et une couche de commande de transmission (162) qui sont totalement indépendantes de l'ensemble de supports de données (310) et une couche de liaison (163) qui adapte une charge utile provenant de la couche de commande de transmission (162) en un paquet de couche liaison (163) approprié au support de données sélectionné.

3. Système d'alarme de protection sociale (500) selon la revendication 2, dans lequel la couche d'application (161) est configurée pour fonctionner à l'aide d'un paquet de couche d'application (161) ayant un champ d'en-tête, un champ de données facultatif et un champ d'ajout facultatif, dans lequel la couche de commande de transmission (162) est configurée pour fonctionner en utilisant un paquet de commande de transmission formé en ajoutant un en-tête de commande de transmission au paquet de couche d'application (161), et dans lequel la couche de liaison (163) est configurée pour fonctionner en encapsulant le paquet de commande de transmission pour former le paquet de couche liaison (163).

4. Système d'alarme de protection sociale (500) selon la revendication 3, dans lequel les messages d'état sans session (165) et la session de communication maître-esclave utilisent tous deux le même protocole de communication d'alarme de protection sociale.

5. Système d'alarme de protection sociale (500) selon la revendication 4, dans lequel les messages d'état sans session (165) utilisent le paquet de couche d'application (161) ayant uniquement le champ d'en-tête et au moins certains des messages de demande et de réponse (164) de la session de communication maître-esclave utilisent le paquet de couche d'application (161) comportant le champ d'en-tête et le champ de données.

6. Système d'alarme de protection sociale (500) selon la revendication 1, dans lequel les messages d'état sans session (165) ne nécessitent pas de réponse du centre de surveillance (200).

7. Système d'alarme de protection sociale (500) selon la revendication 1, dans lequel le centre de surveillance (200) est configuré pour lancer la session de communication maître-esclave avec l'unité terminale client (110) sur un support de données secondaire de l'ensemble de supports de données (310) après avoir déterminé une perte de communication sur un support de données principal, et dans lequel l'unité terminale client (110) est configurable par le centre de surveillance (200) pour utiliser le support de données secondaire comme support de données sélectionné au lieu du support de données principal, ou vice versa.

8. Système d'alarme de protection sociale (500) selon la revendication 1, dans lequel l'unité terminale client (110) est en outre configurée pour envoyer un message d'interrogation passive sans session au centre de surveillance (200) en réponse auquel le centre de surveillance (200) initie la session de communication maître-esclave avec l'unité terminale client (110) dans un intervalle de temps suffisant pour traverser un parefeu configuré pour protéger l'unité terminale client (110) contre un trafic entrant inattendu.

9. Système d'alarme de protection sociale (500) selon la revendication 1, dans lequel le centre de surveillance (200) est configuré pour effectuer de manière opportuniste une action de maintenance sur l'unité terminale client (110) pendant la session de communication maître-esclave lors de l'identification d'un besoin de maintenance de cette unité terminale client (110) pendant la session de communication maître-esclave.

10. Système d'alarme de protection sociale (500) selon la revendication 1, dans lequel le centre de surveillance (200) est configuré pour demander des informations de capacité d'appel vocal à l'unité terminale client (110) qui identifient un ou plusieurs modes d'appel disponibles au niveau de cette unité terminale client (110) pour prendre en charge un appel vocal.

11. Système d'alarme de protection sociale (500) selon la revendication 10, dans lequel l'unité terminale client (110) est configurée pour fonctionner dans un mode d'appel vocal sélectionné comme indiqué par le centre de surveillance (200) selon les informations de capacité d'appel vocal provenant de l'unité terminale client (110).

12. Système d'alarme de protection sociale (500) selon la revendication 11, dans lequel le mode d'appel vocal est sélectionné dans un groupe comprenant au moins : un mode vocal intégré dans lequel l'unité terminale client (110) est configurée pour effectuer une session vocale intégrée dans le courant session de communication maître-esclave, un mode de rappel dans lequel l'unité terminale client (110) est configurée pour recevoir un rappel du centre de surveillance (200) sur un support de données identifié, et un mode d'appel sortant dans lequel l'unité terminale client (110) est configurée pour appeler le centre de surveillance (200) sur un support de données identifié.

13. Système d'alarme de protection sociale (500) selon la revendication 11, dans lequel la configuration de l'unité de terminale client (110) pour fonctionner en mode d'appel vocal comporte la transmission des paramètres du mode d'appel vocal sélectionné du centre de surveillance (200) à l'unité de terminale client (110).

14. Système d'alarme de protection sociale (500) selon la revendication 1, dans lequel l'unité terminale client (110) comprend un bouton d'alarme pour déclencher manuellement l'événement d'alarme et/ou dans lequel l'unité terminale client (110) est couplée par une liaison sans fil locale à un unité de déclenchement d'alarme personnelle portable ayant un bouton d'alarme pour déclencher manuellement l'événement d'alarme.

15. Procédé de communication entre au moins un terminal client et un centre de surveillance dans un système d'alarme de protection sociale (500), qui comporte l'au moins une unité terminale client (110) configurée pour être installée dans un logement d'un client et le centre de surveillance (200) couplé à distance à l'unité terminale client (110) par un ensemble de supports de données (310) sur un ou plusieurs réseaux de communication, le procédé comprenant :
la formation d'une session de communication maître-esclave, comportant une phase de connexion (501) et une phase de déconnexion (503), entre le centre de surveillance (200) et l'unité terminale client (110) à l'aide d'un support de données sélectionné dans l'ensemble de supports de données (310) sur un réseau de communication sélectionné parmi les un ou plusieurs réseaux de communication,
l'envoi d'un ou plusieurs messages de demande (163) entre le centre de surveillance (200) et l'unité terminale client (110) pendant la session de communication maître-esclave, le déclenchement d'un événement d'alarme en fonction d'un message de réponse (164) entre le centre de surveillance (200) et l'unité terminale client (110) pendant la session de communication maître-esclave, et la prise en charge d'un appel vocal entre l'unité terminale client (110) et le centre de surveillance (200) en réponse à l'événement d'alarme ; et
la transmission de messages d'état sans session (165) à des intervalles prédéterminés de l'unité terminale client (110) au centre de surveillance (200) à l'aide du support de données sélectionné sur le réseau de communication sélectionné, dans lequel les messages d'état sans session (165) sont envoyés par l'unité terminale client (110) sans former la session de communication maître-esclave avec le centre de surveillance (200).
